# EUROPEAN PATENT SPECIFICATION

(11) **EP 2 443 408 B1**
(45) Date of publication and mention of the grant of the patent: **19.02.2020**
(21) Application number: 10726472.3
(22) Date of filing: 11.06.2010
(51) Int. Cl.: F28F 27/00, G01K 17/10

(54) **DEVICE FOR METERING THE HEAT ENERGY EMITTED BY RADIATORS, CONVECTOR HEATERS OR THE LIKE, PARTICULARY FOR THE APPORTIONMENT OF HEATING AND/OR CONDITIONING COSTS**
VORRICHTUNG ZUR MESSUNG DER VON STRAHLERN, KONVEKTOREN ODER DERGLEICHEN EMITTIERTEN WÄRMEENERGIE, IM BESONDEREN ZUR AUFSCHLÜSSELUNG VON HEIZ- UND/ODER KLIMATISIERUNGSKOSTEN
DISPOSITIF DE MESURE DE L'ÉNERGIE THERMIQUE ÉMISE PAR DES RADIATEURS, RADIATEURS CONVECTEURS OU ANALOGUES, EN PARTICULIER POUR LA RÉPARTITION DE COÛTS DE CHAUFFAGE ET/OU DE CLIMATISATION

(30) Priority: 17.06.2009 IT VR20090087
(43) Date of publication of application: 25.04.2012
(73) Proprietor: Bonetti, Luigi, 25024 Leno (IT)
(72) Inventor: Bonetti, Luigi, 25024 Leno (IT)
(74) Representative: Modiano, Micaela Nadia
(86) International application number: PCT/EP2010/058250
(87) International publication number: WO 2010/146003

(56) References cited:
- EP-A- 0 035 085
- EP-A- 0 065 201
- CH-A5- 667 328
- DE-A1- 3 644 966
- DE-U1- 9 111 971
- JP-A- 4 120 423
- US-A- 5 026 171

## Description

### Technical Field

The present invention relates to a device for metering the heat energy emitted by radiators, convector heaters or the like, particularly for the apportionment of heating and/or conditioning costs. The invention relates more specifically to such devices as defined in the preamble of claim 1, and as disclosed in CH 667 328 A.

### Background Art

In many dwelling situations, such as for example condominiums, there are heating systems constituted by a centralized boiler body, which supplies each dwelling unit with the hot water required for example to heat the rooms.

Especially in old-generation systems, for example those with so-called rising pipes, ducts for the delivery of the hot water and for the return of the cold water branch out from the boiler body and are connected, by means of unions and interconnection ducts, to the manifolds of each radiator, radiating panel or convector heater.

In order to allow each dwelling unit to pay as a function of the heat energy that is actually used, metering devices or heat apportionment devices have long been commercially available which are placed on each radiator and measure and record the heat consumption of each radiator.

Currently known metering devices, however, perform an indirect measurement of heat consumption, since by way of a probe they measure an index that is correlated to heat emission: to allow calculation of actual heat consumption, it is necessary to "program" each metering device, or use typical coefficients in cost apportionment, by entering the specific data (number of elements, radiant power for each element/column, et cetera) of the radiator or of the fanless convector heater with which it is associated.

In this regard it is noted that by using the traditional metering devices described above it is not possible to meter the consumption of fan convector heaters (which operate by forced convection).

The types of metering device briefly described above, despite being used widely, are however not free from drawbacks.

First of all, it is evident that the need to enter the specific data of the radiators or convector heaters causes two different types of problem; first of all, the installation technician must pay particular attention in programming, and on the other hand it has been observed that the specific power data provided by the manufacturers are not always reliable.

DE 3644966 A1, in the name of Gentischer, discloses a system for measuring heat consumption in a heating system composed of a hot water generator connected by means of pipes to a plurality of radiators.

In this system, each radiator is provided with a thermostatic valve that has a sensor adapted to detect the closed or open state of the valve. Each radiator is further associated with temperature sensors designed to measure the delivery and return temperature. The system described in DE 3644966 A1, however, merely estimates the heat consumption for each radiator, providing the thermostatic valve in such a manner that it can in some way adjust the flow of water that enters the radiator.

Although this constructive solution is valid from a conceptual standpoint, it is extremely unsatisfactory from a practical standpoint for various reasons.

First of all, the system performs an indirect estimate of the amount of water that flows through each radiator, since such estimate is based on the measurement, by means of a sensor, of the closure or degree of opening of the thermostatic valve, and on the fact that inside the valve there are pressure adjustment means which, in theory, should adjust the amount of water that passes through the radiator.

It is clearly evident that the precision of the estimate is influenced by several factors, such as correct operation of the pressure adjustment means, and by the tolerances of the mechanical components that define, within the thermostatic valve, the opening or openings for the inflow of the hot water toward the radiator.

In this regard, substantial problems from a constructive standpoint are observed in trying to insert, within the thermostatic valve, further additional components such as the sensor for detecting the closed and open condition and the pressure adjustment means.

Moreover, the inflexibility of application of the system described in DE 3644966 A1 is evident, since it can be used exclusively on radiators or on fanless heat converters, moreover provided with a thermostatic valve.

In some new-generation systems there are instead multiple outgoing and return ducts that extend from the centralized boiler, as besides disclosed in DE 9111971 U1 in the name of Landis & Gyr Betriebs Ag and in EP 0035089 in the name of Aquametro AG.

Each pair of ducts is designed to connect the centralized boiler to the radiators of a respective dwelling unit and is provided with respective meters for the delivery and return temperature and for the flow-rate of water sent through the delivery duct.

These systems allow to meter the heat consumption of each dwelling unit, but they, too, have drawbacks, which are constituted for example by the need to use several pairs of ducts (one pair for each dwelling unit), with an evident increase in the installation costs of the system.

Moreover, it is evident that this measurement method cannot be used in condominiums with systems using rising pipes.

Finally, it is noted that the flow-rate and temperature meters used in these systems have longitudinal space occupations that do not allow to use them at the individual radiators and/or heat converters that have already been installed and positioned for a long time.

### Disclosure of the Invention

The aim of the present invention is to solve the problems and obviate the drawbacks noted above, by providing a device for direct metering of the heat energy and/or refrigerating energy emitted by radiators, convector heaters or the like, particularly for the apportionment of heating and/or conditioning costs, that is considerably easier and more practical to use than known types of metering device currently in use.

Within this aim, an object of the invention is to provide a device for metering the heat and/or refrigerating energy emitted by radiators, heat convectors or the like that is easy to install and has extremely low operating costs.

Another object of the invention is to devise a metering device that can be used to apportion the heat energy of fan convector heaters.

A further object of the invention is to provide a device for metering the heat energy and/or refrigerating energy emitted by radiators, convector heaters or the like in which reprogramming operations are not necessary in case of replacement of the radiator, convector heater or the like and which allows practical installation without particular technical interventions on the system.

Another object of the invention is to propose a device for metering the heat energy and/or refrigerating energy emitted by radiators, convector heaters or the like that has a competitive manufacturing cost, so that its use is advantageous also from an economic standpoint.

This aim, as well as these and other objects that will become better apparent hereinafter, are achieved by a device for metering the heat energy and/or refrigerating energy emitted by radiators, convector heaters or the like, particularly for the apportionment of heating and/or conditioning costs, according to what is provided in claim 1.

### Brief description of the drawings

Further characteristics and advantages of the invention will become better apparent from the following detailed description of some preferred but not exclusive embodiments of a device for metering the heat energy and/ or refrigerating energy emitted by radiators, convector heaters or the like, particularly for the apportionment of heating and/or conditioning costs, according to the invention, illustrated by way of non-limiting example in the accompanying drawings, wherein:
Figure 1 is a schematic view of a first embodiment of a metering device according to the invention;
Figure 2 is a view of a second embodiment of the metering device;
Figure 3 is a view of a practical embodiment of the metering device;
Figures 4 and 5 are respectively a sectional view and a front view of a closure valve associated with a water flow-rate measurement device.

### Ways of carrying out the Invention

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figures, the present invention relates to a device, generally designated by the reference numeral 1, for metering the heat and/or refrigerating energy emitted by radiators, convector heaters, radiating panels or the like, particularly for the apportionment of heating and/or conditioning costs.

The metering device 1 comprises a radiator 2, which is connected, by means of a delivery manifold 3 and a return manifold 4, respectively to a duct 5 for the delivery of the hot water sent by a boiler 7 to the radiator 2 and to a duct 6 for the return of the water in output from the radiator 2 toward the boiler 7.

According to the present invention, the metering device 1 comprises a first meter 8 for the temperature of the water that flows through the delivery manifold 3 and a second meter 9 for measuring the temperature of the water that flows through the return manifold 4 of the radiator 2.

There is also a meter 10 for the flow-rate of water that flows through the radiator 2.

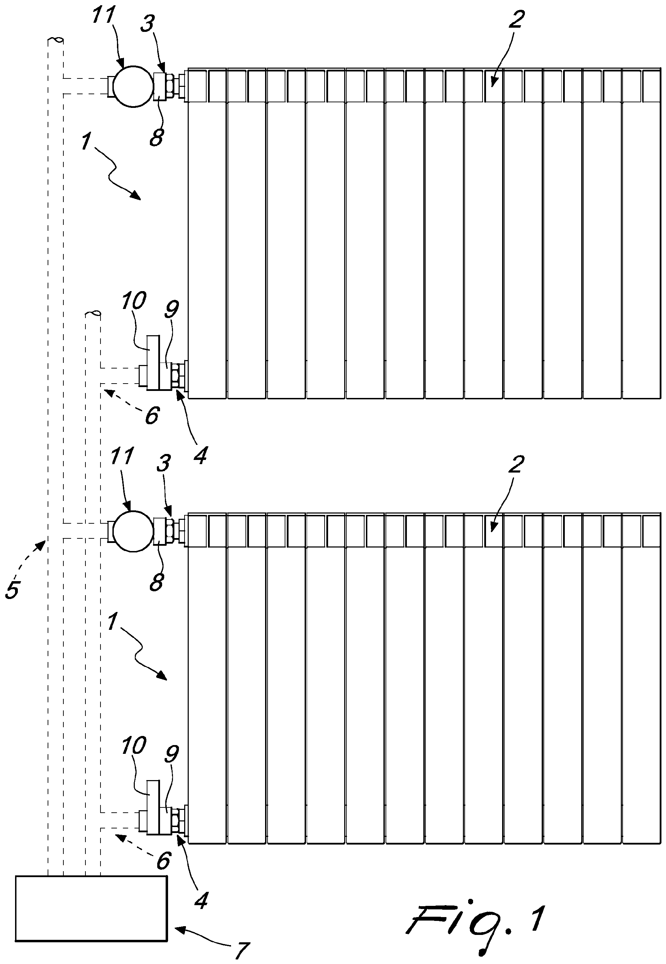

Conveniently, as shown in Figure 1, the metering device 1 comprises at least two radiators 2 or, advantageously, a plurality of radiators 2 or the like, each of which is associated with the first meter 8 of the temperature of the water that flows through the delivery manifold 3, to the second meter 9 of the temperature of the water that flows through the return manifold 4 and to a meter 10 for measuring the flow-rate of the water that flows through the radiator 2.

Conveniently, the radiators 2 can belong to different dwelling units (for example of the same condominium building) which are connected, by means of the delivery manifold 3 and the return manifold 4, to the boiler 7, which is typically constituted by a so-called centralized boiler for example by means of rising pipes.

With reference to the diagram shown in Figure 1, the flow meter 10 is arranged substantially at the return manifold 4, so as to measure the water flow-rate in output from the radiator 2.

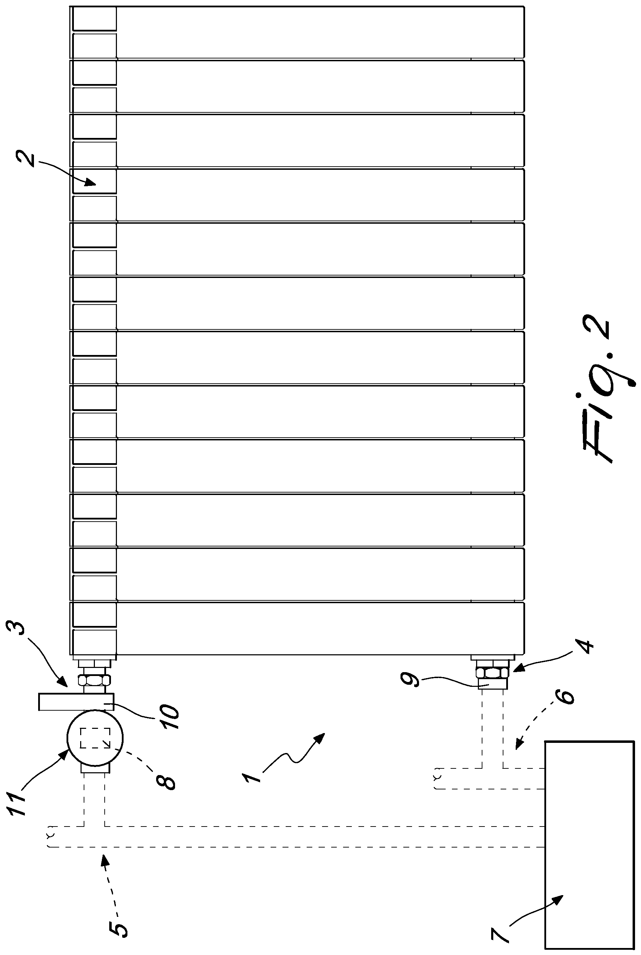

Of course, nothing forbids the provision, as shown schematically in Figure 2, to arrange the flow meter 10 for the water that passes through the radiator 2 along the delivery manifold 3.

The flow meter 10 is advantageously chosen within the group that comprises:
- Venturi flow meters;
- volumetric flow meters;
- turbine flow meters;
- ultrasound flow meters;
- electromagnetic flow meters;
- infrared flow meters.

It has been found that the use of so-called static flow meters is particularly advantageous.

According to a preferred embodiment, the delivery manifolds 3 are associated with a valve 11 for adjusting the flow-rate of hot water in input to the respective radiator 2.

Specifically, the first temperature meter 8 is accommodated within the adjustment valve 11.

Advantageously, the return manifolds 4 in turn are associated with a respective closure valve 16, commonly referenced by the expression lockshield valve, for the flow-rate of water in output from the radiator 2. In case of heat convectors it will not be necessary to install a thermostatic valve, but it will instead be possible to simply provide a temperature acquisition probe trap.

In this case, the second temperature meter 9 is accommodated inside the closure valve 16.

It is convenient for the adjustment valve 11 to be constituted by an adjustable thermostatic valve, designed to control the flow of the delivery manifold 3 in order to allow to adjust, according to requirements, the temperature of the room and therefore of the water that circulates within the radiator 2.

The first meter 8 for the temperature of the water that flows through the delivery manifold 3 can advantageously be accommodated within the adjustable thermostatic valve.

In order to allow the acquisition, and consequently the processing, of the data related to the heat consumption of each radiator 2, it is advantageous for the metering device 1 to have a device 12 for storing the data measured by the or each first meter 8 for the temperature of the water that flows through the delivery manifold 3, the data measured by the or each second meter 9 for the temperature of the water that flows through the return manifold 4, and the data measured by the or each flow meter 10 for the water that flows through the radiator 2.

The storage device 12, which can of course be interfaced with per se known data processing systems, allows to measure directly, continuously or at predefined time intervals, the heat consumption of the individual radiator 2.

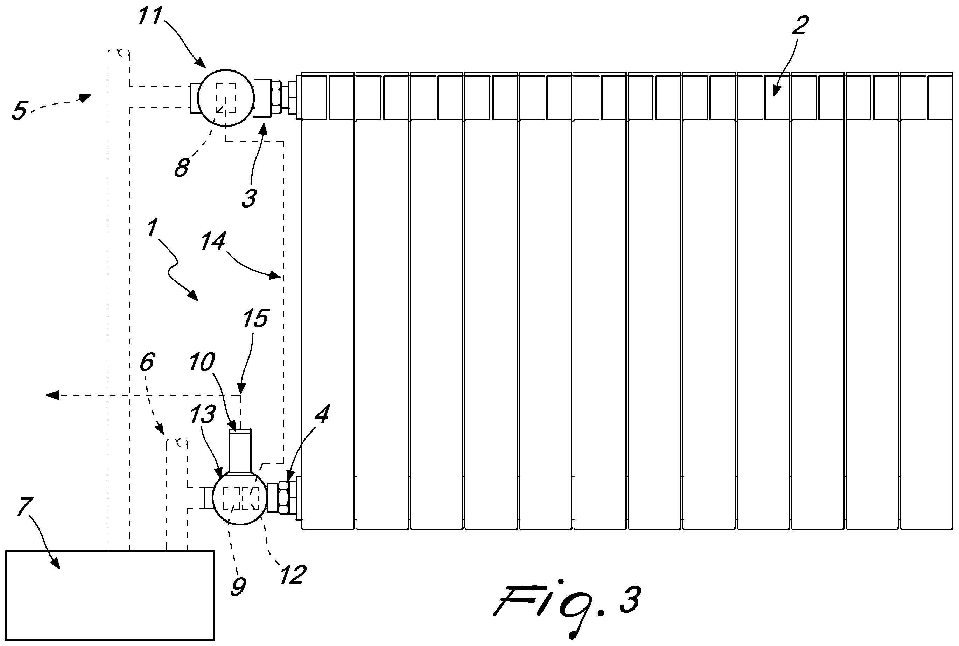

With reference to the embodiment shown in Figure 3, the metering device 1 comprises a containment structure 13, which can be positioned at the return manifold 4.

The containment structure 13 accommodates internally the flow meter 10 and is connected to the second meter 9 for the temperature of the water that flows through the return manifold 4, so as to be able to acquire directly therefrom the measured data.

Conveniently, the containment structure 13 comprises internally the storage device 12.

The metering device 1 further has means 14 for sending the data measured by the first meter 8 for the temperature of the water that flows through the delivery manifold 3 toward the storage device 12.

The storage device 12 is further associated with means for sending the stored data to a centralized apportionment system; in this regard, it is convenient for the storage device to be provided with power supply means which allow both to store the data and to send such data toward the apportionment system.

Preferably, such sending means 14 can be constituted by a data transmission cable or by wireless transmission means. In this case, the first meter 8 for the temperature of the water that flows through the delivery manifold 3 must be associated with a battery that allows data transmission.

Such battery might be associated with automatic recharging devices capable for example of utilizing the temperature variation to recharge the battery.

The containment structure 13 can thus be associated with a data transmission antenna 15 and optionally with a display device adapted to allow the user to check at any time the heat and/or refrigerating consumption.

According to an aspect of the present invention, the metering device 1 comprises means for the removable application of the flow meter 10 on the return manifold 4 or on the delivery manifold 3.

In particular, the removable application means are adapted to allow disassembly of the flow meter 10 and optionally of the storage device 12 associated therewith from the return manifold 4 in order to check periodically (for example every five years) the correct operation of the flow meter 10: this allows to obtain certifications (for example, the MID - Measuring Instruments Directive - certification) capable of giving assurance to the user as to the correct operation of the flow meter 10.

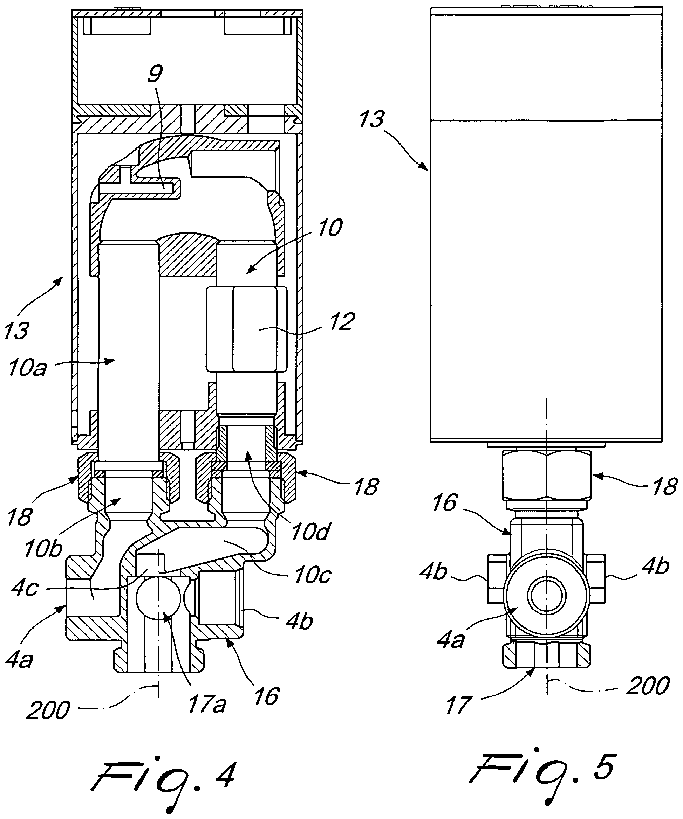

Conveniently, as clearly shown in Figures 4 and 5, the flow meter 10 is associated with a closure valve 16, also known as lockshield valve.

In particular, the closure valve 16 has a space occupation, and in particular a longitudinal space occupation, that is substantially similar to the space occupation of the closure valves 16 that are currently used, so as to allow use of the metering device 1 according to the invention without the need to intervene on the systems that have already been installed.

Specifically, the flow meter 10 has an inverted U-shaped duct 10a connected, through an inlet 10b, to the outlet 4a of the radiator 2.

On the opposite side, the inverted U-shaped duct 10a leads to a supply opening 10d which is connected, conveniently by means of a connecting portion 10c, to an outlet 4c, which can be opened/closed by means of a closure body 17 that can be operated, for example with a screwdriver, by the user.

In particular, the closure body 17 comprises a flow control ball 17a, which is designed to be moved along a movement direction 200 in order to shift between a flow blocking condition (in which it closes the outlet 4c) and partial and/or total opening conditions, in which the outlet 4c is connected to a respective discharge opening 4b that leads into the return manifold 4.

Advantageously, the closure valve 16 has three discharge openings 4b, which are distributed with a mutual angular spacing of 90° with respect to the movement direction 200.

Depending on the mutual position between the radiator 2 and the return manifold 4, two of the three discharge openings 4b are blocked.

Conveniently, the inverted U-shaped duct 10a can be connected, at the inlet 10b and at the supply opening 10d, and by way of connecting means typically constituted by threaded nuts 18, to the closure valve 16 so as to be able to remove, if necessary, the inverted U-shaped duct 10a.

The operation of a device 1 for metering the heat energy and/or refrigerating energy emitted by radiators, heat convectors or the like, particularly for the apportionment of heating and/or conditioning costs according to the invention, is evident from what has been described above.

In this regard, it has been observed that the metering device 1 allows to measure the emitted heat energy of each radiator 2 very precisely and so as to allow to use substantially the first adjustment valves 11 that are currently commercially available and inside which the first temperature meter 8 is to be accommodated.

The provision of a flow meter 10 that is external to the first adjustment valve 11 and advantageously arranged along the return manifold 4 allows to perform an actual direct measurement, not an indirect estimate, of the flow of water that passes through the radiator 2.

Moreover, this system allows to measure the heat emitted by radiators and/or by convectors, both natural and of the type with air forced by using fans, and the heat emitted (or the refrigeration units consumed) by heating and conditioning systems in general.

If one wishes to meter the calories/refrigeration units in heat convectors provided with a fan, it is in fact possible to simply associate the first temperature meter 8 within the probe trap along the delivery manifold 3 without the need to use thermostatic valves.

Moreover, thanks to the flexibility of the metering system 1 according to the invention, it is possible to meter apartments or condominiums in which mutually different heating/cooling means are installed.

Moreover, the possibility to disassemble from the radiator 2, conveniently in a detachable manner, the flow meter 10 (and optionally the storage device 12 associated therewith) allows to periodically check correct operation.

In practice, the dimensions may be any according to requirements.

All the details may further be replaced with other technically equivalent elements.

The disclosures in Italian Patent Application No. VR2009A000087 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (1) for metering the heat energy emitted by radiators, convector heaters or the like, particularly for the apportionment of heating and/or conditioning costs, comprising a radiator (2) which is connected, through a respective delivery manifold (3) and a respective return manifold (4), respectively to a duct (5) for delivery of the hot water sent by a boiler (7) to said radiator (2) and to a duct (6) for return of the water in output from said radiator (2) toward said boiler (7), and also comprising , for said radiator (2), a first meter (8) for the temperature of the water that flows through the respective delivery manifold (3) and a second meter (9) for the temperature of the water that flows through the respective return manifold (4), there being further a flow meter (10) for the water that flows through said radiator (2), said flow meter (10) being arranged at said return manifold (4) so as to measure the water flow-rate in output from said radiator (2); the metering device further comprising a device (12) for storing the data measured by said first meter (8) for the temperature of the water that flows through said delivery manifold (3), by said second meter (9) for the temperature of the water that flows through said return manifold (4), and by said flow meter (10) for the water that flows through said radiator (2);
**characterized in that** said flow meter (10) has an inverted U-shaped duct (10a) connected, through an inlet (10b), to an outlet (4a) of said radiator.

2. The metering device (1) according to claim 1, **characterized in that** it comprises a plurality of radiators (2) which are connected, through a respective delivery manifold (3) and a respective return manifold (4), respectively to said delivery duct (5) and to said return duct (6), each one of said radiators (2) being associated with a first meter (8) for the temperature of the water that flows through the respective delivery manifold (3) and with a second meter (9) for the temperature of the water that flows through the respective return manifold (4), there being also a flow meter (10) for the water that flows through each one of said radiators (2).

3. The metering device (1) according to one or more of the preceding claims, **characterized in that** said inverted U-shaped duct (10a) leads to a supply opening (10d) connected, by means of a connecting portion (10c), to a second outlet (4c) which can be opened/closed by means of a closure body (17).

4. The metering device (1) according to claim 3, **characterized in that** said closure body (17) comprises a flow control ball (17a) movable along a movement direction (200) in order to shift between a flow blocking condition and partial and/or total opening conditions, in which said second outlet (4c) is connected to a respective discharge opening (4b) leading to said return manifold (4).

5. The metering device (1) according to claim 3 or 4, **characterized in that** said inverted U-shaped duct (10a) is connectable to said inlet (10b) and to said supply opening (10d) and, by means of connecting means, to a closure valve (16) of said return manifold (4), so as to be able to be removed.

6. The metering device (1) according to one or more of the preceding claims, **characterized in that** said flow meter (10) is chosen within the group that comprises:
- volumetric flow meters;
- Venturi flow meters;
- turbine flow meters;
- ultrasound flow meters;
- electromagnetic flow meters;
- infrared flow meters.

7. The metering device (1) according to one or more of the preceding claims, **characterized in that** said delivery manifolds (3) are associated with a respective first valve (11) for adjusting the flow-rate of hot water in input to the respective radiator, said first temperature meter (8) being accommodated within said adjustment valve (11).

8. The metering device (1) according to one or more of the preceding claims, **characterized in that** said return manifolds (4) are associated with a respective closure valve (16), said second temperature meter (9) being accommodated within said closure valve (16).

9. The metering device (1) according to claim 7, **characterized in that** said adjustment valve (11) comprises an adjustable thermostatic valve.

10. The metering device (1) according to one or more of the preceding claims, **characterized in that** it comprises a containment structure (13), which can be positioned at said return manifold (4) and accommodates said flow meter (10) and is connected to said second meter (9) for the temperature of the water that flows through said return manifold (4).

11. The metering device (1) according to one or more of the preceding claims, **characterized in that** said containment structure (13) comprises said storage device (12).

12. The metering device (1) according to one or more of the preceding claims, **characterized in that** it comprises means for the removable application of said flow meter (10) on said return manifold (4).

13. The metering device (1) according to claim 1, **characterized in that** it comprises means for sending the data measured by said first meter (8) for the temperature of the water that flows through said delivery manifold (3) toward said storage device (12).

## Patentansprüche

1. Eine Vorrichtung (1) zur Messung der von Strahlern, Konvektoren oder dergleichen emittierten Wärmeenergie, insbesondere zur Aufschlüsselung von Heiz- und/oder Klimatisierungskosten, die einen Strahler (2) umfasst, welcher über einen dazugehörigen Zuführverteiler (3) und einen dazugehörigen Rücklaufverteiler (4) mit einer Leitung (5) zur Zufuhr des von einem Boiler (7) gelieferten heißen Wassers an den Strahler (2) beziehungsweise mit einer Leitung (6) für den Rücklauf des Wassers, das von dem Strahler (2) kommt, zu dem Boiler (7) verbunden ist; und die außerdem für den Strahler (2) ein erstes Messgerät (8) für die Temperatur des Wassers umfasst, das durch den dazugehörigen Zuführverteiler (3) strömt, und ein zweites Messgerät (9) für die Temperatur des Wassers, das durch den dazugehörigen Rücklaufverteiler (4) strömt; wobei es weiter ein Durchflussmessgerät (10) für das Wasser gibt, das durch den Strahler (2) strömt, wobei das Durchflussmessgerät (10) an dem Rücklaufverteiler (4) angeordnet ist, um die Wasserdurchflussrate am Ausgang des Strahlers (2) zu messen; wobei die Messvorrichtung weiter eine Vorrichtung (12) zum Speichern der Daten umfasst, die von dem ersten Messgerät (8) für die Temperatur des Wassers gemessen werden, das durch den Zuführverteiler (3) strömt; von dem zweiten Messgerät (9) für die Temperatur des Wassers, das durch den Rücklaufverteiler (4) strömt; und von dem Durchflussmessgerät (10) für das Wasser, das durch den Strahler (2) strömt;
**dadurch gekennzeichnet, dass** das Durchflussmessgerät (10) eine Leitung (10a) in Form eines umgekehrten "U"s hat, die über einen Einlass (10b) mit einem Auslass (4a) des Strahlers verbunden ist.

2. Die Messvorrichtung (1) gemäß Anspruch 1, **dadurch gekennzeichnet, dass** sie eine Vielzahl von Strahlern (2) umfasst, die über einen dazugehörigen Zuführverteiler (3) und einen dazugehörigen Rücklaufverteiler (4) mit der Zuführleitung (5) beziehungsweise mit der Rücklaufleitung (6) verbunden sind; wobei jeder der Strahler (2) mit einem ersten Messgerät (8) für die Temperatur des Wassers verbunden ist, das durch den dazugehörigen Zuführverteiler (3) strömt, und mit einem zweiten Messgerät (9) für die Temperatur des Wassers, das durch den dazugehörigen Rücklaufverteiler (4) strömt; wobei es auch ein Durchflussmessgerät (10) für das Wasser gibt, das durch jeden der Strahler (2) strömt.

3. Die Messvorrichtung (1) gemäß einem oder mehreren der obigen Ansprüche, **dadurch gekennzeichnet, dass** die Leitung (10a) in Form eines umgekehrten "U"s zu einer Zuführöffnung (10d) führt, welche über einen Verbindungsabschnitt (10c) mit einem zweiten Auslass (4c) verbunden ist, der durch einen Verschlusskörper (17) geöffnet/verschlossen werden kann.

4. Die Messvorrichtung (1) gemäß Anspruch 3, **dadurch gekennzeichnet, dass** der Verschlusskörper (17) eine Durchflusssteuerungskugel (17a) umfasst, die in einer Bewegungsrichtung (200) beweglich ist, um zwischen einem Durchflussblockier-Zustand und partiellen und/oder vollständigen Öffnungszuständen zu wechseln, in welchen der zweite Auslass (4c) mit einer entsprechenden Auslassöffnung (4b) in Verbindung steht, die zu dem Rücklaufverteiler (4) führt.

5. Die Messvorrichtung (1) gemäß Anspruch 3 oder 4, **dadurch gekennzeichnet, dass** die Leitung (10a) in Form eines umgekehrten "U"s mit dem Einlass (10b) und der Zuführöffnung (10d) und über Verbindungsmittel mit einem Verschlussventil (16) des Rücklaufverteilers (4) verbindbar ist, um entfernt werden zu können.

6. Die Messvorrichtung (1) gemäß einem oder mehreren der obigen Ansprüche, **dadurch gekennzeichnet, dass** das Durchflussmessgerät (10) aus der Gruppe gewählt ist, die Folgendes umfasst:
- volumetrische Durchflussmesser,
- Venturi-Durchflussmesser,
- Turbinen-Durchflussmesser,
- Ultraschall-Durchflussmesser,
- elektromagnetische Durchflussmesser,
- Infrarot-Durchflussmesser.

7. Die Messvorrichtung (1) gemäß einem oder mehreren der obigen Ansprüche, **dadurch gekennzeichnet, dass** die Zuführverteiler (3) mit einem entsprechenden ersten Ventil (11) zur Einstellung der Durchflussgeschwindigkeit von Heißwasser am Eingang des jeweiligen Strahlers verbunden sind, wobei das erste Temperaturmessgerät (8) in dem Stellventil (11) untergebracht ist.

8. Die Messvorrichtung (1) gemäß einem oder mehreren der obigen Ansprüche, **dadurch gekennzeichnet, dass** die Rücklaufverteiler (4) mit einem entsprechenden Verschlussventil (16) verbunden sind, wobei das zweite Temperaturmessgerät (9) in dem Verschlussventil (16) untergebracht ist.

9. Die Messvorrichtung (1) gemäß Anspruch 7, **dadurch gekennzeichnet, dass** das Stellventil (11) ein einstellbares thermostatisches Ventil umfasst.

10. Die Messvorrichtung (1) gemäß einem oder mehreren der obigen Ansprüche, **dadurch gekennzeichnet, dass** sie eine Aufnahmestruktur (13) umfasst, die an dem Rücklaufverteiler (4) positioniert sein kann und das Durchflussmessgerät (10) enthält und mit dem zweiten Messgerät (9) für die Temperatur des Wassers, das durch den Rücklaufverteiler (4) strömt, verbunden ist.

11. Die Messvorrichtung (1) gemäß einem oder mehreren der obigen Ansprüche, **dadurch gekennzeichnet, dass** die Aufnahmestruktur (13) die Speichervorrichtung (12) umfasst.

12. Die Messvorrichtung (1) gemäß einem oder mehreren der obigen Ansprüche, **dadurch gekennzeichnet, dass** sie Mittel zum reversiblen Anbringen des Durchflussmessgeräts (10) an dem Rücklaufverteiler (4) umfasst.

13. Die Messvorrichtung (1) gemäß Anspruch 1, **dadurch gekennzeichnet, dass** sie Mittel umfasst, um die von dem ersten Messgerät (8) für die Temperatur des Wassers, das durch den Zuführverteiler (3) strömt, gemessenen Daten an die Speichervorrichtung (12) zu senden.

## Revendications

1. Dispositif (1) pour mesurer l'énergie thermique émise par des radiateurs, des radiateurs convecteurs ou analogues, en particulier pour la répartition des coûts de chauffage et/ou de climatisation, comportant un radiateur (2) qui est relié, par un collecteur de distribution (3) respectif et un collecteur de retour (4) respectif, respectivement à une conduite (5) pour la distribution de l'eau chaude envoyée par une chaudière (7) audit radiateur (2) et à une conduite (6) pour le retour de l'eau en sortie dudit radiateur (2) vers ladite chaudière (7), et comportant également, pour ledit radiateur (2), un premier mesureur (8) pour la température de l'eau qui s'écoule à travers le collecteur de distribution (3) respectif et un second mesureur (9) pour la température de l'eau qui s'écoule à travers le collecteur de retour (4) respectif, un débitmètre (10) y étant en outre agencé pour l'eau qui s'écoule à travers ledit radiateur (2), ledit débitmètre (10) étant agencé sur ledit collecteur de retour (4) de manière à mesurer le débit d'eau en sortie dudit radiateur (2), le dispositif de mesure comportant en outre un dispositif (12) pour stocker les données mesurées par ledit premier mesureur (8) pour la température de l'eau qui s'écoule à travers ledit collecteur de distribution (3), par ledit second mesureur (9) pour la température de l'eau qui s'écoule à travers ledit collecteur de retour (4), et par ledit débitmètre (10) pour l'eau qui s'écoule à travers ledit radiateur (2),
**caractérisé en ce que** ledit débitmètre (10) a une conduite en forme de U inversé (10a) reliée, via une entrée (10b), à une sortie (4a) dudit radiateur.

2. Dispositif de mesure (1) selon la revendication 1, **caractérisé en ce qu'**il comporte une pluralité de radiateurs (2) qui sont reliés, via un collecteur de distribution (3) respectif et un collecteur de retour (4) respectif, respectivement à ladite conduite de distribution (5) et à ladite conduite de retour (6), chacun desdits radiateurs (2) étant associé à un premier mesureur (8) pour la température de l'eau qui s'écoule à travers le collecteur de distribution (3) respectif et à un second mesureur (9) pour la température de l'eau qui s'écoule à travers le collecteur de retour (4) respectif, un débitmètre (10) y étant également agencé pour l'eau qui s'écoule à travers chacun desdits radiateurs (2) .

3. Dispositif de mesure (1) selon une ou plusieurs des revendications précédentes, **caractérisé en ce que** ladite conduite en forme de U inversé (10a) mène à une ouverture d'alimentation (10d) reliée, au moyen d'une partie de liaison (10c), à une seconde sortie (4c) qui peut être ouverte/fermée au moyen d'un corps de fermeture (17).

4. Dispositif de mesure (1) selon la revendication 3, **caractérisé en ce que** ledit corps de fermeture (17) comporte une bille de régulation de débit (17a) mobile le long d'une direction de déplacement (200) afin de se déplacer entre un état de blocage d'écoulement et des états d'ouverture partielle et/ou totale, dans lequel ladite seconde sortie (4c) est reliée à une ouverture d'évacuation (4b) respective menant audit collecteur de retour (4).

5. Dispositif de mesure (1) selon la revendication 3 ou 4, **caractérisé en ce que** ladite conduite en forme de U inversé (10a) est reliée à ladite entrée (10b) et à ladite ouverture d'alimentation (10d) et, par des moyens de liaison, à une soupape de fermeture (16) dudit collecteur de retour (4), de manière à pouvoir être retirée.

6. Dispositif de mesure (1) selon une ou plusieurs des revendications précédentes, **caractérisé en ce que** ledit débitmètre (10) est choisi dans le groupe qui comporte :
- des débitmètres volumétriques ;
- des débitmètres à venturi ;
- des débitmètres à turbine ;
- des débitmètres à ultrasons ;
- des débitmètres électromagnétiques ;
- des débitmètres infrarouges.

7. Dispositif de mesure (1) selon une ou plusieurs des revendications précédentes, **caractérisé en ce que** lesdits collecteurs de distribution (3) sont associés à une première soupape (11) respective pour régler le débit d'eau chaude en entrée du radiateur respectif, ledit premier mesureur de température (8) étant reçu à l'intérieur de ladite soupape de réglage (11).

8. Dispositif de mesure (1) selon une ou plusieurs des revendications précédentes, **caractérisé en ce que** lesdits collecteurs de retour (4) sont associés à une soupape de fermeture (16) respective, ledit second mesureur de température (9) étant reçu à l'intérieur de ladite soupape de fermeture (16).

9. Dispositif de mesure (1) selon la revendication 7, **caractérisé en ce que** ladite soupape de réglage (11) comporte un robinet thermostatique réglable.

10. Dispositif de mesure (1) selon une ou plusieurs des revendications précédentes, **caractérisé en ce qu'**il comporte une structure de confinement (13), qui peut être positionnée sur ledit collecteur de retour (4) et reçoit ledit débitmètre (10) et est reliée audit second mesureur (9) pour la température de l'eau qui s'écoule à travers ledit collecteur de retour (4).

11. Dispositif de mesure (1) selon une ou plusieurs des revendications précédentes, **caractérisé en ce que** ladite structure de confinement (13) comporte ledit dispositif de stockage (12).

12. Dispositif de mesure (1) selon une ou plusieurs des revendications précédentes, **caractérisé en ce qu'**il comporte des moyens pour l'application amovible dudit débitmètre (10) sur ledit collecteur de retour (4) .

13. Dispositif de mesure (1) selon la revendication 1, **caractérisé en ce qu'**il comporte des moyens pour envoyer les données mesurées par ledit premier mesureur (8) pour la température de l'eau qui s'écoule à travers ledit collecteur de distribution (3) vers ledit dispositif de stockage (12).
